Europäisches Patentamt

European Patent Office

Office européen des brevets

(19)

(11) Numéro de publication : **0 479 859 B1**

(12) **FASCICULE DE BREVET EUROPEEN**

(45) Date de publication du fascicule du brevet :
**10.11.93 Bulletin 93/45**

(51) Int. Cl.$^5$ : **G08G 1/01**, G01P 11/02

(21) Numéro de dépôt : **90910132.1**

(22) Date de dépôt : **26.06.90**

(86) Numéro de dépôt international :
**PCT/FR90/00470**

(87) Numéro de publication internationale :
**WO 91/00581 10.01.91 Gazette 91/02**

(54) **DISPOSITIF POUR APPRECIER LE COMPORTEMENT DES USAGERS DE LA ROUTE.**

(30) Priorité : **26.06.89 FR 8908662**

(43) Date de publication de la demande :
**15.04.92 Bulletin 92/16**

(45) Mention de la délivrance du brevet :
**10.11.93 Bulletin 93/45**

(84) Etats contractants désignés :
**AT BE CH DE DK ES FR GB IT LI LU NL SE**

(56) Documents cités :
**EP-A- 0 170 559
CH-A- 0 416 742
DE-A- 3 025 774
FR-A- 2 204 001
FR-A- 2 526 191
US-A- 3 199 074
IEEE TRANSACTIONS ON VEHICULAR TECH-
NOLOGY. vol. vt-29, no. 2, mai 1980, NEW
YORK, US; pages 130-137; Sims et al.: "The
Sydney Coordinated Adaptive Traffic System
Philosophy and Benefits", voir page 134,
colonne 1, ligne 40 - page 134, colonne 1, ligne
45**

(73) Titulaire : **CENTRE D'ETUDES TECHNIQUES
DE L'EQUIPEMENT DE L'EST SERVICE
EXTERIEUR DE L'ETAT
1 Boulevard de la Solidarité
F-57076 Metz (FR)**

(72) Inventeur : **CARE COLIN, Serge
3, rue Aux-Blés
F-57680 Abry (FR)**
Inventeur : **MANSUY, Philippe
1, rue Jean-Moulin
F-69740 Genas (FR)**
Inventeur : **MARCELLIER, Robert
Le Kilbs
F-67870 Bischoffsheim (FR)**
Inventeur : **STANZCYK, Daniel
46, avenue Wilson
F-54800 Jarny (FR)**

(74) Mandataire : **Chanet, Jacques
56 avenue de Royat B.P. 27
F-63401 Chamalières Cédex (FR)**

## Description

La présente invention concerne un dispositif appelé VIETEST, marque déposée, son procédé et ses applications pour apprécier l'influence de l'environnement sur le comportement d'un groupe d'hommes et/ou d'animaux intelligents ou conditionnés placés ou non dans des corps en mouvement, par la meure des vitesses moyennes du groupe, individuellement mesurées et triées, préférentiellement avant et après modification de l'environnement.

Il existe des appareils dans le domaine routier

- le cinénomètre qui permet à l'aide d'un capteur à effet DOPPLER de mesurer la vitesse instantannée et précise à des fins essentiellement de répression,
- la station de mesure du trafic lourd qui permet à l'aide de boucles électromagnétiques de délivrer la vitesse moyenne d'un groupe de véhicules, la dispersion, le nombre de véhicules en dépassement d'un seuil de vitesse.

Ces matériels sont d'un prix élévé et encombrants :

- ∗ pour le premier 50 000 F.F. et de la dimension d'une valise
- ∗ pour le second 100 000 F.F. et de la dimension d'une armoire.

De plus le procédé de mesure nécessite pour le second des travaux de génie civil couteux de l'ordre de 30 000 F.F. à reconduire pour chaque point de mesure.

Le dispositif selon l'invention (revendication 1) permet d'apporter une solution plus pratique, peu encombrante, rapide de mise en oeuvre, moins sophistiquée, économique.

La publication FR2204001 (BENAC et CHESA) décrit un analyseur de vitesse basé sur le temps écoulé entre deux impulsions engendrées dans des tuyaux élastiques placés en travers de la chaussée. Le but de ce dispositif est de fournir un comptage des véhicules classés par tranches de vitesse.

L'invention a, sans doute, un but commun avec le dispositif précité, mais les moyens utilisés, fondamentalement différents puisqu'ils sont basés sur l'effet Doppler produit sur des ondes électromagnétiques permettent d'atteindre d'autres buts : classification selon des critères de longueur, de temps de présence, etc.

En outre, le dispositif selon l'invention PENAC et CHESA nécessite une installation sur la chaussée donc lourde, gênante et surtout visible, qui peut être perçue par les conducteurs et modifier leur comportement.

La publication US3199074 (HALES et AL) décrit un dispositif d'analyse de la vitesse de véhicules, mettant en oeuvre l'effet Doppler produit non plus sur des ondes électromagnétiques mais sur des ondes ultrasonores ; le traitement des informations recueillies paraît être du type analogique et électromécanique ; ce dispositif pourrait être considéré à travers ses résultats (classement par longueur des véhicules et par vitesse) comme le plus proche de l'invention, mais il en diffère par les moyens mis en oeuvre.

La publication IEEE TANSACTIONS ON VEHICULAR TECHNOLOGY propose un système de gestion de trafic qui pourrait, semble-t-il, utiliser les informations fournies aussi bien par le dispositif de l'invention que par certaines des publications citées, mais qui ne divulgue en rien un quelconque capteur.

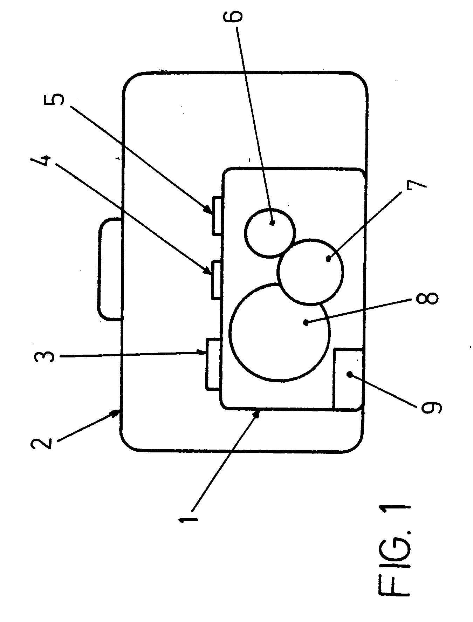

La figure 1 est représentative du dispositif.

La figure 2 est représentative du procédé.

Le dispositif est constitué par un boitier (1) dissimulable à l'intérieur d'une enveloppe (2) artificielle, par exemple attaché-case, sac, pochette, préférentiellement munie d'une poignée pour le transport, l'orientation, la prise de mesure en déplacement ou d'une borne ou d'un délinéateur. Selon une variante, l'enveloppe est ou imite un élément naturel telle une pierre, une branche d'arbre.

Sur le boitier sont fixés un afficheur (3) programmable sur lequel on affiche le seuil de vitesse choisie, . deux compteurs afficheurs (4) et (5), l'un indique le nombre de corps en mouvement dépassant le seuil de vitesse programmé, l'autre situé préférentiellement en-dessous indique le nombre total de corps en mouvement indépendamment de la vitesse des corps, la lecture des deux compteurs fournit instantanément le rapport, par exemple 6/35 avant aménagement, 2/52 après aménagement. C'est-à-dire de 17 % à 4 % de réduction approximative de dépassement du seuil ce qui signifie que l'aménagement second incite à un ralentissement significatif de 17 - 4 = 13 % allant probablement dans le sens d'une meilleure sécurité.

Ce qui est significatif c'est la différence de pourcentage et ce qui est remarquable c'est que cette différence de pourcentage ne nécessite pas de grandes précisions dans les mesures, d'une part parce que l'effet de nombre gomme les écarts, d'autre part parce que la différence efface complètement une altération unilatéralement orientée.

A l'intérieur du boitier (1) sont logés des composants électroniques à savoir un capteur (6) à effet DOPPLER, un étage d'amplification (7), un étage logique (8) de commande des compteurs une ou plusieurs piles ou batteries (9).

Le capteur agit à travers le boitier et à travers l'enveloppe sans qu'il soit nécessaire d'extraire un quelconque objectif.

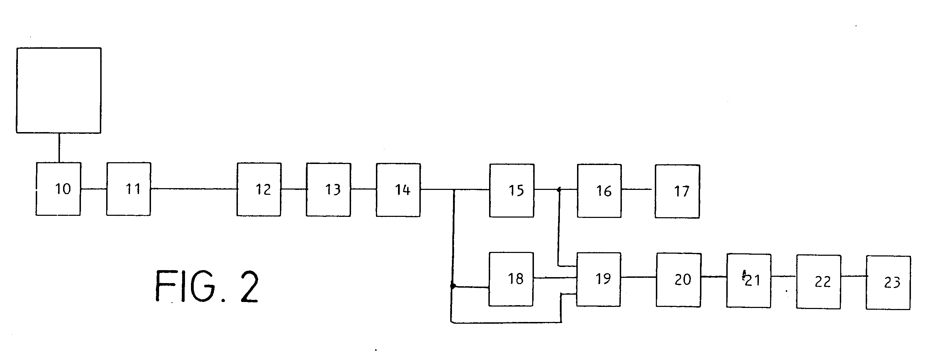

Le capteur à effet Doppler délivre pour chaque passage de corps en mouvement un signal de très faible amplitude dont la fréquence est proportionnelle à la vitesse du corps en mouvement. Ce signal est appliqué (voir la figure 2) à un circuit d'adaptation d'impédance (10) suivi d'un filtre dérivateur (11) assurant l'annulation de la composante continue délivrée par le capteur.

Un amplificateur (12) de gain variable augmente l'amplitude du signal puis un filtre passe bande (13) de bande passante (1 000 Hz - 10 000 Hz) assure l'amplification du signal utile. Ce signal est orienté vers un étage "trigger" (14) à seuil d'entrée variable dont le rôle est de fournir un signal compris entre 0 et 5V.

Ce dispositif constitue la partie amplification. Le signal est ensuite orienté vers un étage dit "Logique". Il comprend 3 entrées. Elles sont les suivantes :

- un monostable (15) dont le temps de créneau de tension de sortie est de 500 ms par exemple. Ce temps est règlable entre 200 ms et 2 s, il dépend de la vitesse moyenne des corps en un point donné. Il représente le temps de passage maximum d'un véhicule devant la tête DOPPLER. Le signal est guidé vers une photo coupleur P (16) qui commande un compteur (17) comptabilisant le nombre total de corps,

- un monostable (18) dont le temps de créneau de tension est de durée constante, par exemple (30 ms). Durant ce temps sont comptés les créneaux de tension provenant de l'étage amplification,

- un circuit logique (19) n'assure le passage des créneaux de tension de la partie amplification que si les deux monostables (15) et (18) sont actifs.

Ces créneaux de tension sont orientés vers un compteur (20) programmable qui les comptabilise et dont la sortie passe d'un niveau bas à un niveau haut lorsque le nombre programmé est atteint. Ce nombre est représentatif d'un seuil de vitesse.

Le signal est orienté vers un monostable (21) dont le créneau de tension en sortie est d'une durée équivalente au créneau en sortie du monostable (15). Il commande un photocoupleur (22) qui active un compteur (23) comptabilisant le nombre de corps dépassant le seuil de vitesse programmé. Lorsque le signal DOPPLER est appliqué à l'entrée de l'amplificateur, le signal à la sortie de l'amplification en (5) est de forme rectangulaire de fréquence (y) proportionnelle à la vitesse (x) du corps d'expression mathématique :

$$y = k \, x \text{ avec } K = \text{Hz/km}$$

Le compteur (17) comptabilise un corps quelle que soit la fréquence de signal. Le compteur (22) comptabilise un corps si la fréquence du signal est supérieure ou égale au nombre programmé du compteur programmable.

Selon une variante le dispositif permet la mesure de la vitesse, du temps de présence devant le capteur ce qui va permettre d'afficher Vitesse instantanée, Vitesse moyenne, longueur des corps, classification par seuil de longueur. Dans ce mode de Fonctionnement, la partie Amplification reste similaire à la description ci-avant. Les circuits 10, 11, 12, 13 et 14 sont identiques. La variante s'ajoute à la suite de ces circuits.

Le signal à la sortie de l'amplificateur (14) est guidé vers deux circuits :

- un compteur qui comptabilise le nombre total de créneaux de tension. Ce nombre donné par le passage d'un corps est orienté vers un circuit diviseur par 44,7. Le nombre à la sortie du diviseur est égal à la vitesse du véhicule,

- un compteur du temps qui va comptabiliser le nombre de 1/10 de ms entre l'apparition du premier créneau donné par le début du corps détecté et le dernier créneau donné sur l'arrière du même corps détecté.

Les deux nombres sont dirigés vers le circuit multiplicateur (V x t= e). Le résultat en sortie de ce circuit sera la longueur du véhicule à laquelle s'ajoute la largeur du faisceau de détection.

- le nombre est comparé au moyen d'un circuit comparateur à un nombre équivalent à une longueur de 5 m par exemple. S'il est inférieur, un compteur comptabilise les corps de type court, dans le cas où il est égal ou supérieur, un autre compteur comptabilise les corps de type long.

Ce dispositif en sortie de l'amplificateur (14) peut être assimilé à un microordinateur.

Les applications de ces dispositifs et de leurs procédés sont très larges, elles concernent tout ce qui bouge, en particulier les usagers de la route, qu'ils soient dans un véhicule, sur une moto, sur un cycle ou à pied. Elles permettent de révéler des comportements par rapport à des situations physiques de l'environnement physique et mental de l'individu. Ce sont des applications visant à l'amélioration de la sécurité routière.

D'autres applications peuvent concerner les épreuves sportives, coureurs à pied, cyclistes, skieurs, les passages de troupeaux.

Selon une variante du dispositif, un microordinateur associé au capteur et à l'étage d'amplification va permettre pour chaque corps de calculer, afficher, éditer, mémoriser la vitesse, le temps de présence, le temps inter corps, la longueur des corps.

Le procédé pour compter le nombre de corps en dépassement d'un seuil de vitesse et le nombre total de corps est caractérisé en ce qu'il comporte les phases opérations consistant à :

- délivrer un signal, au moyen d'un capteur à effet DOPPLER, représentatif de la vitesse d'un corps,

- amplifier et filtrer le signal donné par le capteur, afin que l'on ait un signal utile, par exemple de niveau bas OV et de niveau haut 5V, dont la fréquence ou le nombre d'impulsions est proportionnel à la vitesse du corps,

- compter le nombre des impulsions se situant à l'intérieur d'une fenêtre de temps prédéterminée,

- comptabiliser un corps en dépassement de vitesse si le nombre des impulsions dépasse un nombre d'impulsion affiché et programmé sur roues codeuses ou sur afficheurs numériques,
- comptabiliser le nombre total des corps indépendamment de leur vitesse de passage.

Selon une extension du procédé, il est possible de relever les mesures suivantes pour chaque corps : vitesse, longueur du corps, temps de présence devant le capteur, temps inter-corps caractérisé en ce qu'associé à un micro-ordinateur, il comporte les phases opératoires suivantes :

- délivrer,
- amplifier, filtrer,
- comptabiliser le nombre total des créneaux de tension donné par le passage d'un corps devant le capteur,
- diviser ce nombre par le coefficient kilométrique donné par le constructeur du capteur à effet DOPPLER. Exemple 44,7 Hz. Le nombre trouvé après division est la vitesse du corps,
- comptabiliser le nombre de 1/10 ms entre l'apparition du premier créneau donné par le début du corps détecté et le dernier créneau donné par ce même corps. Ce nombre représente le temps de présence du véhicule devant le capteur,
- comptabiliser le nombre de 1/10 ms entre l'apparition du premier créneau donné par le passage d'un premier corps et le premier créneau donné par le passage d'un deuxième corps avant le premier sur la même voie de circulation. Ce nombre représente le temps inter-corps. Le temps est calculé pour chaque véhicule,
- multiplier la vitesse du corps par le temps de présence du corps auquel l'on soustrait la largeur approximative du faisceau DOPPLER. Cette distance représente la longueur des corps,
- visualiser et mémoriser ces informations de base énumérées ci-avant. Celles-ci vont servir au calcul de la vitesse moyenne, du temps moyen d'occupation, du temps moyen de présence, de la longueur moyenne d'un groupe de corps ainsi que des différentes classifications selon des critères de longueur, vitesses ou temps de présence durant une période de temps significative.

Selon une autre variante du dispositif, le capteur (6) est positionné à l'intérieur de l'enveloppe (2) avec un angle réglable par rapport à la piste ou sont mesurées les caractéristiques des mobiles. L'enveloppe se positionne préférentiellement à distance parallèlement à l'axe de la piste, dans le sens de sa longueur, ce qui est pratique du fait du positionnement préalable du capteur à l'intérieur de l'enveloppe. Les mesures sont préférentiellement prises soit à l'avant du mobile, soit à l'arrière.

Le capteur est alimenté en permanence ou cycliquement avec un cycle réglable. Exemple : il est alimenté durant untemps de 10 ms tous les 100 ms tant qu'il n'y a pas détection de mobile. Dès qu'il y a détection d'un mobile, le capteur est alimenté en permanence tant que le mobile se trouve dans le champ d'action du capteur, l'alimentation discontinue permet de limiter la consommation du dispositif.

La portée de l'émission et de la réception du faisceau Doppler est réglable selon des palliers de distances. Exemple : la portée du faisceau est réglable par l'action sur le gain de l'amplificateur (12) figure 2 au moyen d'un commutateur à plusieurs positions : Exemple : 2 m, 5 m5, 9 m, 12,50 m.

Selon une autre extension du procédé, en particulier afin d'éviter tout oubli de mobile susceptible d'être masqué par un autre, on associe préférentiellement deux dispositifs placés sensiblement de part et d'autre des bords de la route unidirectionnelle ou bidirectionnelle ou de la piste ou du couloir, ces dispositifs sont orientés préférentiellement de façon divergente pour éviter les interactions.

Dans cette configuration, un seul des dispositifs peut être utilisé et simplement complété par un ou plusieurs capteurs associés à leurs électroniques selon le nombre de voies ou selon les distances, le dispositif est alors relié aux équipements complémentaires par des liaisons, filiaires, radio ou infra rouge.

Selon une autre variante du dispositif pour remplacer les boucles électromagnétiques utilisées en métrologie dans les domaines routier, autoroutier, aéronautique et/ou pour limiter la consommation d'énergie, le ou les dispositifs sont associés à un autre capteur de présence tel que capteur piezo-électrique, tube pneumatique, boucle électro magnétique, etc... établissant momentanément l'alimentation du capteur Doppler et l'enregistrement des mesures au passage d'un mobile.

Selon une autre variante du dispositif, l'afficheur (3), les compteurs afficheurs (4) et (5) le contacteur de marche et arrêt mais aussi toute autre commande ou affichage de lecture sont transférables sur une mini planche plate souplement reliée par une liaison filaire extra plate aux équipements du boitier (1) de manière à éviter l'ouverture de l'enveloppe, faciliter l'usage et réduire les consommations d'énergie.

La mini planche pouvant être avantageusement placée notamment par fixation magnétique, clipsage ou bande velcro etc... à proximité de la poignée de l'enveloppe (2) pour permettre d'une seule main de porter l'enveloppe et manoeuvrer discrètement et digitalement les boutons et compteurs.

Une liaison autre que filaire peut être envisagée par radio ou infrarouge autorisant une commande simultanée de plusieurs dispositifs en un même lieu, en des lieux proches ou beaucoup plus espacés jusqu'à quelques kilomètres, en ce cas, le dispositif peut être abandonné par exemple dans une voiture ou maison ou poubelle ou candélabre et les mesures effectuées à distance à des fins très diverses.

## Revendications

1. Dispositif discret destiné à apprécier le comportement général d'hommes ou d'animaux, isolés ou en groupe, l'appréciation procédant de l'analyse de la cinétique de corps, tels que véhicules, hommes ou animaux, du type de dispositif utilisant un capteur pour fournir des informations sur, à la fois la vitesse d'au moins un corps, la distance inter-corps et des moyens, contenus dans un boîtier, pour traiter les informations et les stocker, caractérisé :

en ce que le boîtier (1), logé dans une enveloppe (2), comporte :
   - d'une part, un afficheur programmateur (3), pour afficher le seuil de vitesse choisie, et deux compteurs-afficheurs (4,5) l'un indiquant le nombre de corps en mouvement dépassant le seuil de vitesse programmé, l'autre le nombre total de corps en mouvement,
   - d'autre part, et à l'intérieur du boitier : un capteur (6) a effet Doppler, agissant à travers le boitier et l'enveloppe, un étage d'amplification (7, 10 à 14), un étage logique (8, 15 à 23) de commande desdits compteursafficheurs et au moins une alimentation (9) par pile ou batterie, l'étage logique (8, 15 à 23) comprenant lesdits compteurs,

ledit étage d'amplification comprenant les éléments sivants connectés en série à la sortie du capteur (6) dans l'ordre indiqué ci-dessous:
   - un circuit d'adaptation d'impédance (10),
   - un filtre dérivateur (11) destiné à annuler la composante continue délivrée par le capteur,
   - un amplificateur de gain variable (12) destiné à augmenter l'amplitude du signal,
   - un filtre passe bande (13) destiné à amplifier le signal utile,
   - un étage "trigger" (14) à seuil d'entrée variable destiné à fournir un signal compris entre 0 et 5 V , et

ledit étage logique comprenant les éléments suivants connectés en série à l'étage "trigger" (14) dans l'ordre indiqué ci-dessous:
   - un monostable (15) à créneau de tension de sortie ayant un temps réglable,
   - un photo coupleur (16),
   - un compteur (4,17) commandé par la photo coupleur, pour comptabiliser le nombre des corps,
   - un monostable (18) à temps de créneau constant commandé par l'étage "trigger"(14) et destiné à compter les créneaux provenant de l'étage. d'amplification,
   - un circuit logique (19) destiné à n'autoriser le passage des créneaux de la partie amplification que si les deux monostables (15,18) sont actifs,
   - un compteur (3,20) programmable destiné à comptabiliser les créneaux, dont la sortie basse passe d'un niveau bas à un niveau haut lorsqu'un nombre de créneaux programmé dans l'afficheur programmateur est atteint, ce nombre étant représentatif du seuil de vitesse,
   - un monostable (21) dit troisième, commandé par la sortie du compteur programmable (20),
   - un photo coupleur (22), dit deuxième, commandé par le troisième monostable,
   - un compteur (5,23) commandé par le deuxième photo coupleur, destiné à compter le nombre de corps dépassant le seuil de la vitesse programmée ;

2. Dispositif selon la revendication 1, caractérisé :
en ce que le signal à la sortie de l'étage "trigger" (14) est appliqué :
   - à un compteur destiné à compter le nombre de créneaux de tension, ce nombre étant ensuite orienté vers un circuit diviseur par 44,7 dont la sortie fournit un nombre égal à la vitesse du corps, et
   - à un compteur de temps destiné à comptabiliser le nombre 1/10 de ms entre l'apparition du premier créneau donné par le début du corps détecté et le dernier créneau donné par l'arrière dudit corps,

en ce que les deux nombres sont dirigés vers un circuit multiplicateur dont la sortie indique la longueur dudit corps augmentée de la largeur du faisceau de détection, et

en ce qu'un circuit comparateur compare cette longueur à une longueur type, pour, à la sortie du comparateur, comptabiliser dans un premier compteur les corps de type court, et dans un deuxième compteur les corps de type long ;

3. Dispositif suivant l'une quelconque des revendications précédentes, caractérisé :
en ce que l'enveloppe est une enveloppe (2) artificielle du groupe d'enveloppes comprenant les sacs, les pochettes, les attaché-case ;

4. Dispositif selon l'une quelconque des revendications précédentes, caractérisé :
en ce que l'enveloppe (2) est une enveloppe naturelle imitant un élément naturel du groupe comprenant les pierres, les branches d'arbres ;

5. Dispositif selon l'une quelconque des revendications précédentes, caractérisé :

en ce que l'afficheur (3), les compteurs (4,5) et toutes autres commandes et affichages sont disposés sur une mini-planche reliée au boîtier (1) par une liaison filaire.

6. Dispositif selon la revendication 1, caractérisé :

en ce que l'afficheur programmateur et les deux compteurs afficheurs sont situés à l'extérieur du boitier ;

7. Dispositif selon la revendication 1, caractérisé :

en ce qu'un micro-ordinateur est associé au capteur à l'étage d'amplification pour permettre, pour chaque corps, de calculer, afficher, éditer, mémoriser la vitesse, le temps de présence, le temps inter-corps et la longueur des corps ;

8. Dispositif selon la revendication 3, caractérisé :

en ce que ladite enveloppe est munie de l'un des éléments du groupe comprenant une poignée, une borne, un délinéateur.

**Patentansprüche**

1. Versteckte Vorrichtung zum Erfassen des allgemeinen Verhaltens von Menschen oder Tieren, für sich alleine oder in Gruppen, wobei das Erfassen in einer Analyse der Körperbewegung besteht, wie von Fahrzeugen, Menschen oder Tieren, von jener Bauart, die einen Sensor zum gleichzeitigen Erfassen der Geschwindigkeit wenigstens eines Körpers sowie des gegenseitigen Abstandes der Körper umfaßt, ferner Mittel, die in einer Kapsel enthalten sind, um die Informationen zu verarbeiten und abzuspeichern, dadurch gekennzeichnet, daß die Kapsel (1), die in einem Gehäuse (2) angeordnet ist, umfaßt:

- einerseits einen programmierbaren Sollwertgeber (3) zum Vorgeben des gewählten Geschwindigkeitssollwertes, und zwei Zähler-Anzeiger (4,5), deren einer diejenige Anzahl der in Bewegung befindlichen Körper angibt, die den programmierten Geschwindigkeits-Grenzwert überschreitet, und deren anderer die Gesamtzahl der in Bewegung befindlichen Körper angibt,
- andererseits im Inneren der Kapsel einen Doppler-Effekt-Sensor (6), der durch die Kapsel und durch das Gehäuse hindurch wirkt, eine Verstärkerstufe (7,10-14), eine logische Steuerstufe (8,15-23) der genannten Zähl-Sollwertgeber sowie wenigstens eine Stromquelle (9), z.B. eine Batterie, wobei die logische Stufe (8,15-23) die genannten Zähler umfaßt,

wobei die Verstärkerstufe die folgenden Elemente aufweist, die mit dem Ausgangssensor (6) in der nachstehend angegebenen Reihenfolge in Reihe geschaltet sind:

- eine Impedanz-Anpassungsschaltung (10),
- ein Ableitungsfilter (11) zum Löschen der kontinuierlichen Komponente, die vom Sensor geliefert wurde;
- einen einstellbaren Verstärker (12) zum Vergrößern der Signalamplitude,
- ein Bandfilter (13) zum Verstärken des Nutzsignales,
- eine Triggerstufe (14) mit variablem Eingangs-Grenzwert, zum Liefern eines Signales, das zwischen 0 und 5 V liegt, und

wobei die genannte logische Stufe die folgenden Elemente aufweist, die mit der Triggerstufe (14) in der folgenden Reihenfolge in Reihe geschaltet sind:

- ein Monoflop (15) mit Rechteck-Ausgangsspannung und regelbarer Zeit;
- einen Fotokoppler (16);
- einen Zähler (4,17), der durch den Fotokoppler gesteuert wird, um die Anzahl der Körper zu erfassen;
- einen Monoflop (18) mit konstanter Zykluszeit, gesteuert durch die Triggerstufe (14) und dazu bestimmt, die Rechtecksignale zu zählen, die von der Verstärkerstufe kommen;
- eine logische Schaltung (19), die dazu dient, den Durchgang der Rechtecksignale des verstärkten Teiles nur dann durchzulassen, wenn die beiden Monoflops (15,18) aktiv sind;
- einen programmierbaren Zähler (3,20) der dazu dient, die Rechtecksignale zu erfassen, deren niederer Ausgang von einem niedrigen auf ein hohes Niveau dann übergeht, wenn eine Anzahl von programmierten Rechtecksignalen im Sollwertgeber erreicht wird, wobei diese Zahl repräsentativ des Geschwindigkeits-Grenzwertes ist;
- einen sogenannten dritten Monoflop (21), der vom Ausgang des programmierbaren Zählers (20) gesteuert ist;
- einen sogenannten zweiten Fotokoppler (22), der vom dritten Monoflop gesteuert ist;
- einen Zähler (5,23), der vom zweiten Fotokoppler gesteuert ist und der dazu dient, die Anzahl der Körper zu zählen, die den programmierten Geschwindigkeits-Grenzwert überschreitet.

2. Vorrichtung nach Anspruch 1, dadurch gekennzeichnet, daß das Ausgangssignal der Triggerstufe (14) eingegeben wird:

- einem Zähler zum Zählen der Anzahl von Spannungsspitzen, wobei diese Anzahl sodann in einer Spannungsteilerschaltung durch 44,7 geteilt wird, um eine Anzahl zu ergeben, die gleich der Geschwindigkeit der Körper ist, und

- einem Zeitzähler zum Zählen der Anzahl von zehntel Millisekunden zwischen dem Erscheinen einer ersten Spitze, gegeben durch das Auftauchen des erfaßten Körpers, und der letzten Spannungsspitze, gegeben durch das Verlassen des genannten Körpers,

ferner dadurch gekennzeichnet, daß die beiden Zahlen einer Multiplikatorschaltung eingegeben werden, deren Ausgang die Länge des genannten Körpers anzeigt, vergrößert um die Breite des Detektorstrahlenbündels, ferner dadurch, daß eine Komparatorschaltung diese Länge mit einem Längentyp vergleicht, um am Ausgang des Komparators in einem ersten Zähler die Körper kurzen Typus zu zählen, und in einem zweiten Zähler die Körper langen Typus.

3. Vorrichtung nach einem der vorausgegangenen Ansprüche, dadurch gekennzeichnet, daß das Gehäuse ein künstliches Gehäuse (2) ist, nämlich ein Sack, eine Tasche, oder eine Aktentasche.

4. Vorrichtung nach einem der vorausgegangenen Ansprüche, dadurch gekennzeichnet, daß das Gehäuse ein natürliches Gehäuse (2), das ein natürliches Element vortäuscht, nämlich Steine oder Baumäste.

5. Vorrichtung nach einem der vorausgegangenen Ansprüche, dadurch gekennzeichnet, daß der Sollwertgeber (3) die Zähler sowie alle anderen Steuerungen und Anzeiger auf einer Schalttafel angeordnet sind, die mit der Kapsel durch Leiter verbunden sind.

6. Vorrichtung nach Anspruch 1, dadurch gekennzeichnet, daß der programmierbare Sollwertgeber und die beiden Zähler außerhalb der Kapsel (1) angeordnet sind.

7. Vorrichtung nach Anspruch 1, dadurch gekennzeichnet, daß ein Mikrorechner dem Sensor der Verstärkungsstufe zugeordnet ist, um es zu ermöglichen, für jeden Körper die Geschwindigkeit, die Anwesenheitsdauer, die Zeitspanne zwischen den Körpern und die Länge der Körper zu berechnen, anzuzeigen, auszudrucken, und zu speichern.

8. Vorrichtung nach Anspruch 3, dadurch gekennzeichnet, daß das Gehäuse (2) mit einem Handgriff, einer Klemme oder einem Schieber ausgerüstet ist.

**Claims**

1. A discrete device for estimating the general behaviour of a number of people or animals, individually or collectively, the estimation preceding analysis of the kinetics of the bodies, such as vehicles, persons or animals, the type of device being used to obtain the above information and when required the average speed of the bodies, the mean distance between the bodies, contained within a case for the treatment of the information and storing it characterised :

in that the case (1) within an envelope (2) carries :

- on the one hand a programming display (3) for display of the chosen speed threshold and two counters (4,5), one to indicate the number of moving bodies exceeding the programmed threshold and the other displaying the total number of moving bodies,

- on the other hand in the interior of the case : a Doppler effect sensor (6) acting through the case and the envelope, an amplification stage (7, 10-14), a logic stage (8, 15-23) to control the said counter displays and power means (9) such as a cell or batteries, the logic stage (8,15 -23) comprising the said counters, the said amplification stage comprising the following elements connected in series at the exit of the sensor (6) in the following order :

- an impedance adjustment circuit (10),

- a derivative filter (11) for cancelling the components continuously delivered by the sensor,

- a variable gain amplifier (12) for increasing the amplitude of the signal,

- a pass band filter (13) for amplifying the useful signal,

- a "trigger" stage (14) having a variable input to supply a signal comprising between OV and 5V, and the said logic stage comprising the following elements connected in series with the "trigger" stage (14) in the following order :

- a monostable (15) to adjust the voltage peaks at regular intervals,

- a photocoupler (16),

- a counter (4,17) controlled by the photocoupler, for counting the number of bodies,

- a monostable (18) having constant peaks controlled by the "trigger" stage (14) and to count the peaks coming from the amplification stage,
- a logic circuit (19) for authorising the passage of peaks of the amplification only part when the two monostables (15,18) are active,
- a counter (3,20) programmable for counting the peaks of which the lower exit passes a low level to a high level, when the number of programmed peaks in the programming display is attained, this number representing the speed threshold,
- a monostable (21) called the third, controlled by the exit of the counter programmable (20),
- a photocoupler (22) called the second, controlled by the third monostable,
- a counter (5,23) controlled by the second photocoupler for counting the number of bodies exceeding the speed threshold.

2. Device according to claim 1, characterised :
   in that the exit signal from the "trigger" stage (14) is applied :
   - to a counter for counting the number of voltage peaks, this number then being divided in a dividing circuit by 44.7 to give number equal to the speed of the bodies, and
   - a time counter to count the number of 1/10 ms between the appearance of a first peak given by the start of the body detected and the last peak given by the departure of the said body,
      and the two numbers are connected to a multiplier circuit at the indicated exit for the length of the said body increased by the speed of deduction and
   - a comparator circuit to compare this length with a length type for at the exit of the comparator, compare in a first counter for short bodies and a second counter for the long bodies.

3. A device according to one of the preceding claims, characterised :
   in that the envelope (2) is an artificial envelope selected from a group of envelopes comprising cases, bags or attache case.

4. A device according to one of the preceding claims, characterised :
   in that the envelope (2) is a natural envelope which simulates a natural element from the group comprising stones, branches of trees.

5. A device according to one of the preceding claims, characterised in that :
   the display (3) the counters (4,5) and all other controls and displays are on a mini floor connected to the case (1) by an associated link.

6. A device according to one of the preceding claims, characterised :
   in that the programmable display and the two counters are situated on the outside of the case.

7. A device according to one of the preceding claims, characterised :
   in that a micro computer is associated with a sensor at the amplification stage for determining for the bodies : calculation, display, editing and storing the speed, the time of which the body is present and the time between bodies and the length of the bodies.

8. A device according to claim 3, characterised :
   in that the said envelope is the shape of an element from the group consisting of a handle, a collar, a delineator.

FIG. 1

FIG. 2